# EUROPÄISCHE PATENTSCHRIFT

(11) **EP 3 381 593 B1**
(45) Veröffentlichungstag und Bekanntmachung des Hinweises auf die Patenterteilung: **22.11.2023**
(21) Anmeldenummer: 18163739.8
(22) Anmeldetag: 23.03.2018
(51) Int. Cl.: B22F 7/06, B33Y 10/00, B29C 64/153, B29C 64/336, B22F 10/28, B22F 12/67, B22F 5/04, B33Y 80/00, B33Y 30/00, B22F 10/36, B22F 10/64, B22F 12/53

(54) **VERFAHREN ZUM STRAHLBASIERTEN SELEKTIVEN SCHMELZEN ODER SINTERN**
METHOD FOR SELECTIVE BEAM-BASED MELTING OR SINTERING
PROCÉDÉ DE FUSION OU DE FRITTAGE SÉLECTIFS PAR FAISCEAU

(30) Priorität: 29.03.2017 DE 102017106722
(43) Veröffentlichungstag der Anmeldung: 03.10.2018
(73) Patentinhaber: Universität Stuttgart, 70174 Stuttgart (DE)
(72) Erfinder: Weihe, Sefan, 85114 Buxheim (DE); Werz, Martin, 70563 Suttgart (DE)
(74) Vertreter: DREISS Patentanwälte PartG mbB

(56) Entgegenhaltungen:
- EP-A1- 0 190 378
- EP-A1- 2 156 942
- EP-A1- 2 719 484
- WO-A1-2010/116221
- DE-A1-102007 033 715
- DE-C1- 19 935 274
- US-A1- 2012 228 807
- US-A1- 2015 071 809

## Beschreibung

Die Erfindung betrifft ein Verfahren zum strahlbasierten Schmelzen oder Sintern zur generativen Herstellung von Bauteilen, insbesondere ein Verfahren zum selektiven Lasersintern, selektiven Laserschmelzen, selektiven Elektronenstrahlsintern oder selektiven Elektronenstrahlschmelzen, wobei sequentiell Schichten aus einem pulverförmigen ersten Werkstoff in einem Pulverbett aufgebracht werden und der pulverförmige erste Werkstoff der Schichten nach Aufbringen einer jeweiligen Schicht schichtweise selektiv durch einen Laserstrahl oder Elektronenstrahl geschmolzen oder gesintert wird. Die Erfindung betrifft ferner eine Vorrichtung zum strahlbasierten Schmelzen oder Sintern mit den Merkmalen des Anspruchs 17.

Derartige Verfahren zum strahlbasierten Schmelzen oder Sintern zur generativen Herstellung von Bauteilen sind weithin bekannt. Generative Fertigungsverfahren, die häufig auch als sogenanntes "Rapid Prototyping" bezeichnet werden, umfassen dabei die oben genannten Pulverbettverfahren, sowie das sogenannte "Direct Metal Deposition". Bei den Pulverbettverfahren wird ein pulverförmiger Werkstoff schichtweise mit einem Rakel oder einer Walze aufgebracht und dann mit einem hochenergetischen Strahl, insbesondere mit einem Laser- oder Elektronenstrahl, lokal geschmolzen oder gesintert. Diese im Pulverbett durchgeführten, sogenannten "Ein-Material-Systeme", bei denen ein einzelner Werkstoff mittels eines Rakels oder einer Walze aufgebracht werden, sind vergleichsweise schnell und kostengünstig.

Beim "Direct Metal Deposition" wird ein pulverförmiger oder drahtförmiger Werkstoff bspw. durch einen Laser- oder Elektronenstrahl aufgeschmolzen und tropfenweise auf ein entstehendes Bauteil aufgebracht. Ferner kann pulverförmiger Werkstoff durch Gasdüsen in einen Fokuspunkt eines Laser- oder Elektronenstrahls eingeblasen werden und dort lokal aufgeschmolzen und tropfenweise auf das entstehende Bauteil aufgebracht werden.

Für viele technische Anwendungsbereiche ist es aus wirtschaftlichen Gründen nicht sinnvoll, ein Bauteil vollständig aus einem vergleichsweise teuren Werkstoff wie bspw. Gold, Titan, Niob, Nickel, Chrom, Tantal, Platin oder dergleichen herzustellen. Die Verfügbarkeit der Werkstoffe ist teilweise so gering oder die Kosten für den Werkstoff sind so hoch, dass ein vollständiges Füllen des Pulverbetts mit dem jeweiligen Werkstoff aus Kosten- oder Verfügbarkeitsgründen nicht möglich ist. Der Markt verlangt daher nach Möglichkeiten, Bauteile durch strahlbasiertes Schmelzen oder Sintern auch aus teuren und/oder selten verfügbaren Werkstoffen herstellen zu können.

Ferner verlangt der Markt nach Möglichkeiten, Bauteile durch strahlbasiertes Schmelzen oder Sintern herzustellen, die aus voneinander verschiedenen Werkstoffen bestehen.

Dabei ist es beim "Direct Metal Deposition" möglich, unter Verwendung mehrerer Gasdüsen, derartige Bauteile aus verschiedenen Werkstoffen herzustellen. Ferner ist es möglich, Bauteile mit Werkstoffgradienten herzustellen. Allerdings ist das "Direct Metal Deposition" vergleichsweise ungenau und es können nur vergleichsweise einfache Geometrien hergestellt werden, wobei insbesondere dünnwandige oder auskragende Strukturen, Hinterschnitte oder kleine Löcher nicht oder nur durch Inkaufnahme der Ungenauigkeiten herstellbar sind.

Es sind darüber hinaus Pulverbettverfahren bekannt, bei denen eine Mehrzahl von Einzel-Dosiereinheiten vorgesehen ist, wobei mit jeder Dosiereinheit ein verschiedener Werkstoff aufgebracht werden kann.

Bei derartigen Pulverbettverfahren wird der pulverförmige Werkstoff mit den verschiedenen Dosiereinheiten jeweils für eine jeweilige Volumeneinheit, sogenannte "Voxel", einzeln, d.h. "voxelweise" aufgebracht. Diese Vorgehensweise ist jedoch vergleichsweise langsam und zeitintensiv und führt daher zu hohen Kosten.

Aus der DE 199 35 274 C1 ist ein Verfahren zum Herstellen von Bauteilen aus einer Werkstoffkombination bekannt, bei dem ein erster, relativ kostengünstiger Werkstoff durch ein strahlbasiertes selektives Schmelzen verarbeitet wird, während ein zweiter Werkstoff durch Laserstrahlgenerieren verarbeitet wird.

Aus der EP 2 156 942 A1 ist ein Verfahren bekannt bei dem ein Bauteil aus zwei Werkstoffen durch ein strahlbasiertes selektives Schmelzen generativ hergestellt wird. Die Verfahrensführung ist relativ aufwändig und führt zu Restriktionen bei der Formgebung und den Eigenschaften der Bauteile.

Aus der EP 2 719 484 A1 ist ein Verfahren bekannt bei dem ein Grundkörper eines Bauteils generativ hergestellt wird. Anschließend wird auf diesen Grundkörper ein zweiter Werkstoff in Pulverform aufgebracht und anschließend gesintert.

Aus der DE 10 2007 033 715 A1 ist ein Verfahren zum Aufbringen einer aus mehreren Materialien bestehenden Produktschicht auf einen Formkörper bekannt.

Aus der US 2012/228807 A1 ist ein Verfahren zum strahlbasierten selektiven Schmelzen oder Sintern zur generativen Herstellung von Bauteilen bekannt, wobei sequentiell Schichten aus einem pulverförmigen ersten Werkstoff in einem Pulverbett aufgebracht werden und der pulverförmige erste Werkstoff der Schichten nach Aufbringen einer jeweiligen Schicht schichtweise selektiv durch einen Laserstrahl oder Elektronenstrahl geschmolzen oder gesintert wird, mit den Schritten: Auflegen einer Maske mit einer ersten Öffnung;Aufbringen eines ersten pulverförmigen Werkstoffs; Bestrahlen des ersten pulverförmigen Werkstoffs mit einem Laser um einen ersten Bereich zu bilden; Bereitstellen einer zweiten Öffnung in der Maske; Aufbringen eines zweiten pulverförmigen Werkstoffs; Bestrahlen des zweiten pulverförmigen Werkstoffs mit einem Laser um einen zweiten Bereich zu bilden.

Der Erfindung liegt daher die Aufgabe zugrunde, ein Verfahren zum strahlbasierten Schmelzen oder Sintern bereitzustellen, mit dem einerseits Bauteile vollständig aus dem vergleichsweise teuren Werkstoff herstellbar sind und mit dem andererseits Bauteile, die aus verschiedenen Werkstoffen bestehen, schnell und kostengünstig herstellbar sind, wobei die Qualität der Bauteile vergleichsweise hoch sein soll.

Diese Aufgabe wird durch das Verfahren mit den Merkmalen des Anspruchs 1 gelöst.

Dabei ist es denkbar, dass als erster Werkstoff bspw. ein Werkstoff mit einer hohen Bruchzähigkeit verwendet wird, wobei als zweiter Werkstoff bspw. ein Werkstoff mit hohem Verschleißwiderstand verwendet werden kann, so dass bspw. Bauteile, wie insbesondere Ventile oder Einspritzdüsen hergestellt werden können, wobei die Bauteilstruktur der Ventile oder Einspritzdüsen aus einem ersten Werkstoff mit hoher Duktilität hergestellt sein kann und wobei die Dichtfläche des Ventils aus einem vergleichsweise harten und verschleißbeständigen Werkstoff hergestellt sein kann. Es ist ferner auch denkbar, Turbinenschaufeln herzustellen, deren Bauteilstruktur im Inneren aus hochfesten und kriechbeständigen ersten Werkstoffen hergestellt ist, wobei die Oberfläche der Turbinenschaufeln aus einem hitzebeständigen und isolierenden zweiten Werkstoff hergestellt sein kann. Vorteilhafterweise wird dabei der erste Werkstoff in einem Massenverhältnis vom ersten Werkstoff zum zweiten Werkstoff im fertigen Bauteil von etwa 95 zu 5 bis etwa 90 zu 10. Beim Aufbringen der Schichten werden die Schichten im Pulverbettverfahren vorteilhafterweise mit einer Grunddicke aufgebracht, wobei das gesamte Pulverbett durch eine Hebevorrichtung jeweils Schichtweise um die Grunddicke abgesenkt wird.

Vorteilhafterweise wird der Laser- oder Elektronenstrahl mittels einer sogenannten NC-Steuerung (numerical control) numerisch gesteuert. Der Laser- oder Elektronenstrahl wird in Bahnen über das Pulverbett gelenkt und arbeitet die Schichten nacheinander ebenenweise ab, wobei die Daten für die numerische Steuerung aus CAD-Daten der Bauteilgeometrie abgeleitet werden.

Um Randbereiche herstellen zu können, welche den ersten Bereich für den zweiten Werkstoff zwar begrenzen, jedoch nicht Teil des fertigen Bauteils sind, erfolgt das bereichsweise Fixieren im zweiten Bereich durch Schmelzen oder Sintern mit einem Laser- oder Elektronenstrahl, der eine geringere Intensität und/oder Leistung aufweist als der Laser- oder Elektronenstrahl, mit dem der zweite Werkstoff an der darunterliegenden Schicht fixiert wird. Somit können Randbereiche mit einer geringeren Festigkeit als die übrigen Bereiche des Bauteils hergestellt werden, welche sich nach Beendigung des generativen Fertigungsverfahrens vergleichsweise leicht vom Bauteil ablösen lassen.

Dabei ist es ferner möglich, dass das bereichsweise Fixieren im zweiten Bereich durch Schmelzen oder Sintern mit einem Laser- oder Elektronenstrahl erfolgt, welcher mit einer höheren Vorschubgeschwindigkeit bzw. Scan-Geschwindigkeit bewegt wird als der Laser- oder Elektronenstrahl, mit dem der zweite Werkstoff an der darunterliegenden Schicht fixiert wird. Somit kann eine in den ersten Werkstoff im zweiten Bereich eingebrachte Strecken- oder Flächenenergie begrenzt werden. Unter Streckenenergie wird in der Schweißtechnik die pro zurückgelegter Strecke einer Schweißnaht eingebrachte Energie in J/mm verstanden. Unter einer Flächenenergie wird dazu analog die pro Fläche einer Schicht eingebrachte Energie in J/mm² verstanden. Es ist jedoch auch denkbar, dass die Randbereiche durch einen Laser- oder Elektronenstrahl mit höherer Leistung oder Intensität nachverfestigt werden, so dass sie ebenfalls Abschnitte der Bauteilstruktur des fertigen Bauteils bilden können.

Das Verfahren sieht vor, dass nach dem flächigen Aufbringen der Schicht des ersten pulverförmigen Werkstoffs und vor dem bereichsweisen Entfernen des ersten Werkstoffs im ersten Bereich der erste Werkstoff bereichsweise in einem vom ersten Bereich verschiedenen zweiten Bereich an der darunterliegenden Schicht fixiert wird. Besonders bevorzugt ist es dabei, wenn der erste Werkstoff vor dem bereichsweisen Entfernen im ersten Bereich derart bereichsweise fixiert wird, dass der zweite Bereich den ersten Bereich begrenzt. Dabei ist es denkbar, dass der zweite Bereich für das Aufbringen des zweiten Werkstoffs als Schablone genutzt wird, so dass ein gezieltes Aufbringen des zweiten Werkstoffs in den ersten Bereich ermöglicht werden kann.

Vorteilhafterweise erfolgt das bereichsweise Entfernen des ersten Werkstoffs durch Wegblasen oder Absaugen oder durch mechanisches Verdrängen, insbesondere durch Wegfegen, Wegbürsten oder Wegschieben, oder durch Wegschleudern unter Verwendung eines Laser- oder Elektronenstrahls. Dabei ist denkbar, dass das Wegschleudern durch partielles Verdampfen oder Sublimieren oder durch elektrostatische Aufladung oder durch schlagartige Ausdehnung eines verwendeten Schutzgases erfolgt.

Um ein Dosieren des zweiten Werkstoffs zu erleichtern und die Genauigkeit der Dosierung zu erhöhen, ist es denkbar, dass das bereichsweise Aufbringen des zweiten Werkstoffs durch Fördern des zweiten Werkstoffs mittels einer Dosiereinrichtung, insbesondere durch einen Kanal, durch eine Düse oder durch einen Druckkopf, insbesondere unter Verwendung eines Trägerfluids, weiter insbesondere unter Verwendung von Druckluft, erfolgt.

Vorteilhafterweise wird bei Verwendung eines nicht gasförmigen Trägerfluides das Trägerfluid vor dem Fixieren des zweiten Werkstoffs mittels eines Laser- oder Elektronenstrahls, insbesondere mittels eines defokussierten Laser- oder Elektronenstrahls, verdampft oder zersetzt.

Eine weitere vorteilhafte Weiterbildung des Verfahrens sieht vor, dass die Schichten jeweils eine Grunddicke aufweisen und dass der zweite Werkstoff in der ersten Schicht in voneinander verschiedenen Subschichten aufgebracht wird, die eine Subschichtdicke aufweisen, welche kleiner ist als die Grunddicke. Vorteilhafterweise werden aneinandergrenzende Subschichten richtungsgebunden entweder dicker oder dünner, d.h. die jeweilige Subschichtdicke wird größer oder kleiner, so dass sich ein Subschichtdickengradient ausbildet.

Als besonders vorteilhaft hat es sich dabei erwiesen, wenn beim Fixieren des ersten Werkstoffs an der darunterliegenden Schicht der erste Werkstoff und der zweite Werkstoff gemeinsam gesintert oder geschmolzen werden, oder wenn beim Fixieren des zweiten Werkstoffs an der darunterliegenden Schicht der zweite Werkstoff und der erste Werkstoff gemeinsam gesintert oder geschmolzen werden. Somit ist es denkbar, die zuvor aufgebrachten Subschichten des zweiten Werkstoffs mit innerhalb derselben Schicht bis zur Grunddicke aufgebrachtem ersten Werkstoff zu verschmelzen, so dass sich der erste und der zweite Werkstoff in der Schmelze miteinander vermischen. Die dabei an den Bereichen der jeweiligen Subschichten entstehenden Mischungsverhältnisse vom ersten und vom zweiten Werkstoff entsprechen dem Verhältnis der Subschichtdicken zur Grunddicke bzw. dem Massenverhältnis vom ersten Werkstoff zum zweiten Werkstoff.

Vorteilhafterweise werden bei dem Verfahren zum strahlbasierten Schmelzen oder Sintern sämtliche Schichten jeweils in zueinander parallelen Ebenen aufgebracht. Eine darüber liegende Schicht ist dabei in einer Ebene über der jeweiligen Schicht angeordnet und eine darunter liegende Schicht ist in einer Ebene unter der jeweiligen Schicht angeordnet.

Vorteilhafterweise wird das Verfahren in einem Pulverbett durchgeführt. Besonders bevorzugt wird das Verfahren unter Verwendung eines Rakels durchgeführt, wobei dann auf schnelle und kostengünstige Weise große Mengen des ersten Werkstoffs gleichzeitig aufgebracht werden können.

Eine weitere besonders vorteilhafte Weiterbildung des Verfahrens sieht vor, dass der erste Werkstoff eine erste Phasenumwandlungstemperatur aufweist und dass der zweite Werkstoff eine zweite Phasenumwandlungstemperatur aufweist, die von der ersten Phasenumwandlungstemperatur verschieden ist, und/oder dass der erste Werkstoff einen ersten Wärmeausdehnungskoeffizienten aufweist und dass der zweite Werkstoff einen zweiten Wärmeausdehnungskoeffizienten aufweist, der vom ersten Wärmeausdehnungskoeffizienten verschieden ist.

Derartige Werkstoffe unterscheiden sich insbesondere im Eisen-, Nickel-, Kohlenstoff-, Mangan- und/oder Chromgehalt. Indem Werkstoffe mit voneinander verschiedener Phasenumwandlungstemperatur und/oder voneinander verschiedenen Wärmeausdehnungskoeffizienten verwendet werden, können die verschiedenen Umwandlungsverhalten durch eine an das generative Schmelz- oder Sinterverfahren anschließende Wärmebehandlung dazu genutzt werden, besonders günstige Eigenspannungszustände in einem Bauteil zu erzeugen. Bei einer derartigen Wärmebehandlung können die Glüh- und/oder Abkühlbedingungen vorzugsweise derart gewählt werden, dass die Werkstoffe bei unterschiedlichen Temperaturen bzw. unterschiedlichen Zeiten umwandeln. Somit ist es bspw. denkbar, dass ein Bauteil bei der Wärmebehandlung vor der Martensitstarttemperatur in einem Warmbad bei einer bestimmten Temperatur gehalten wird, um thermisch induzierte Spannungen abzubauen. Somit können definierte Umwandlungs-Eigenspannungen erhalten werden. Insbesondere kann die Abkühlgeschwindigkeit und/oder die Haltedauer dann so gewählt werden, dass bei wenigstens einem der Werkstoffe keine Umwandlung in den Martensitbereich auftritt, wobei bei wenigstens einem davon verschiedenen Werkstoff eine Abkühlgeschwindigkeit derart gewählt wird, dass eine Volumenzunahme in diesem Werkstoff erfolgt. Somit können insbesondere an Oberflächen von zyklisch beanspruchten Bauteilen, wie bspw. bei Turbinenschaufeln, Werkstoffe mit einem Chrom- und/oder Nickelgehalt von bis zu 20 % eingesetzt werden, um im Bereich der Oberfläche Druckeigenspannungen durch die Wärmebehandlung zu erzeugen.

Eine weitere vorteilhafte Ausgestaltung des Verfahrens sieht vor, dass der erste Werkstoff einen Schlackebildner umfasst, insbesondere ein Schlackebildner ist.

Besonders vorteilhaft ist es dabei, wenn der Schlackebildner Mangansilikat, Rutil, Calciumoxid, Magnesiumoxid oder Calciumfluorid umfasst.

Bei Verwendung eines Schlackebildners als ersten Werkstoff kann der das Pulverbett bildende erste Werkstoff, anstatt Teil der Struktur des fertigen Bauteils zu werden, dazu genutzt werden, Oberflächenrauhigkeiten eines Bauteils, welches aus dem zweiten Werkstoff hergestellt ist, zu reduzieren, wenn die Oberfläche des aus dem zweiten Werkstoff hergestellten Bauteils durch eine geschmolzene Oberfläche der Schlacke gebildet wird. Dies hat sich insbesondere für solche Bauteile als vorteilhaft erwiesen, die aufgrund ihrer Struktur, bspw. aufgrund von Zugänglichkeitsproblemen, nur schwer oder gar nicht mechanisch nachbearbeitet werden können.

Die Verwendung von Schlackebildnern hat sich ferner als vorteilhaft erwiesen, um hohe mechanische Gütewerte zu erreichen, da die Schlacken im zweiten Werkstoff enthaltene Verunreinigungen abbinden. Dabei ist es denkbar, dass, abhängig vom ausgewählten Schlackebildner, keine Vermischung des ersten Werkstoffs und des zweiten Werkstoffs erfolgt, so dass der zweite Werkstoff nicht verloren geht, was sich bspw. bei teuren Werkstoffen wie Gold oder Chrom als vorteilhaft erwiesen hat.

Als besonders vorteilhaft hat es sich dabei erwiesen, wenn die Dichte des ersten Werkstoffs in etwa der Dichte des zweiten Werkstoffs entspricht. Weiterhin werden die Viskositätseigenschaften derart gewählt, dass der zweite Werkstoff durch die entstehende Schlacke des ersten Werkstoffs benetzt wird oder nicht benetzt wird, so dass sich auf Mikroebene gleichmäßige Querschnittsübergänge ergeben.

Bei der Verwendung von Schlackebildnern hat es sich als besonders vorteilhaft erwiesen, wenn beim Fixieren des zweiten Werkstoffs der erste Werkstoff zumindest teilweise geschmolzen wird. Somit kann erreicht werden, dass ein an ein Bauteil, welches aus einem zweiten Werkstoff hergestellt ist, angrenzender Bereich des Schlackebildners geschmolzen wird, um das Bauteil mit Schlackebildner zu benetzen und somit die dabei entstehenden Oberflächenkräfte zwischen dem ersten und dem zweiten Werkstoff ausnutzen zu können. Dabei hat es sich als vorteilhaft erwiesen, wenn eine Oberflächenspannung des zweiten Werkstoffs größer ist als eine Oberflächenspannung des ersten Werkstoffs, d.h. des Schlackebildners.

Eine weitere vorteilhafte Weiterbildung des Verfahrens sieht vor, dass der erste Werkstoff einen ersten Teilwerkstoff umfasst, welcher ein Schlackebildner ist, und dass der erste Werkstoff einen zweiten Teilwerkstoff umfasst, der kein Schlackebildner ist. Somit kann der erste Werkstoff auch ein sogenanntes "Zweistoffsystem" sein. Es ist denkbar, dass der zweite Teilwerkstoff ein vom zweiten Werkstoff verschiedener Werkstoff ist. Bei Verwendung eines zweiten Teilwerkstoffs, welcher größere Oberflächenkräfte als der erste Teilwerkstoff aufweist, kann der zweite Teilwerkstoff auf dem Bauteil, d.h. auf dem zweiten Werkstoff abgeschieden werden, so dass sich auf dem Bauteil eine Schicht aus dem ersten Teilwerkstoff abscheidet. Wenn sich der zweite Teilwerkstoff und der zweite Werkstoff unterscheiden, kann somit eine Beschichtung mit vergleichsweise hoher Oberflächengüte erzeugt werden.

Es ist jedoch auch möglich, dass der zweite Teilwerkstoff identisch zum zweiten Werkstoff ist. Somit können genauere und/oder hochwertigere Oberflächen des Bauteils, welches aus dem zweiten Werkstoff besteht, insbesondere Oberflächen mit einer geringeren Oberflächenrauheit, erzeugt werden, als durch das lokale Aufbringen des zweiten Werkstoffs.

Die eingangs genannte Aufgabe wird auch gelöst durch eine Vorrichtung zum strahlbasierten Schmelzen oder Sintern mit den Merkmalen des Anspruchs 17. Eine solche Vorrichtung zum strahlbasierten Schmelzen oder Sintern, insbesondere eine Vorrichtung zum selektiven Lasersintern, selektiven Laserschmelzen, selektiven Elektronenstrahlsintern oder selektiven Elektronenstrahlschmelzen, weiter insbesondere zur Durchführung des Verfahrens nach wenigstens einem der Ansprüche 1 bis 16, weist wenigstens ein Pulverbett auf, das zur Aufnahme eines ersten pulverförmigen Werkstoffs ausgelegt ist. Sie weist ferner eine Speichereinrichtung für den ersten pulverförmigen Werkstoff, und ein Rakel oder eine Walze, das zum schichtweisen Aufbringen des ersten Werkstoffs im Pulverbett ausgelegt ist, auf und zeichnet sich dadurch aus, dass eine Dosiereinrichtung vorgesehen ist, die zum bereichsweisen Aufbringen des zweiten Werkstoffs ausgelegt ist, insbesondere durch Fördern des zweiten Werkstoffs durch einen Kanal, durch eine Düse oder durch einen Druckkopf, insbesondere unter Verwendung eines Trägerfluids, weiter insbesondere unter Verwendung von Druckluft.

Vorteilhafterweise umfasst das Pulverbett eine Vorschubeinrichtung, die zum schichtweisen Absenken des Pulverbetts in einer Richtung orthogonal zu den Ebenen der Schichten ausgelegt ist.

Weitere Einzelheiten und vorteilhafte Weiterbildungen sind der nachfolgenden Beschreibung zu entnehmen, anhand derer verschiedene Weiterbildungen der Erfindung näher beschrieben und erläutert sind.

Es zeigen:
- Figur 1: eine schematische Darstellung einer erfindungsgemäßen Vorrichtung zum strahlbasierten Schmelzen oder Sintern;
- Figur 2: einen Verfahrensschritt des eines Verfahrens zum strahlbasierten Schmelzen oder Sintern;
- Figur 3: einen auf den Verfahrensschritt von Figur 2 folgenden Verfahrensschritt des Verfahrens zum strahlbasierten Schmelzen oder Sintern;
- Figur 4: einen auf den Verfahrensschritt von Figur 3 folgenden Verfahrensschritt des Verfahrens zum strahlbasierten Schmelzen oder Sintern;
- Figur 5: einen Ausschnitt der Vorrichtung gemäß Figur 1 nach Beendigung des Verfahrensschritts von Figur 4;
- Figur 6: einen auf den Verfahrensschritt von Figur 4 folgenden Verfahrensschritt des Verfahrens zum strahlbasierten Schmelzen oder Sintern;
- Figur 7: einen Ausschnitt der Vorrichtung gemäß Figur 1 nach Beendigung des Verfahrensschritts von Figur 6;
- Figur 8: einen auf den Verfahrensschritt von Figur 6 folgenden Verfahrensschritt des Verfahrens zum strahlbasierten Schmelzen oder Sintern;
- Figur 9: einen Ausschnitt der Vorrichtung gemäß Figur 1 nach Beendigung des Verfahrensschritts von Figur 8;
- Figur 10: einen Verfahrensschritt des erfindungsgemäßen Verfahrens zum strahlbasierten Schmelzen oder Sintern;
- Figur 11: einen auf den Verfahrensschritt von Figur 10 folgenden Verfahrensschritt des erfindungsgemäßen Verfahrens zum strahlbasierten Schmelzen oder Sintern;
- Figur 12: einen auf den Verfahrensschritt von Figur 11 folgenden Verfahrensschritt des erfindungsgemäßen Verfahrens zum strahlbasierten Schmelzen oder Sintern;
- Figur 13: einen auf den Verfahrensschritt von Figur 12 folgenden Verfahrensschritt des erfindungsgemäßen Verfahrens zum strahlbasierten Schmelzen oder Sintern;
- Figur 14: einen Ausschnitt der Vorrichtung gemäß Figur 1 nach Beendigung des Verfahrensschritts von Figur 13;
- Figur 15: einen auf den Verfahrensschritt von Figur 13 folgenden Verfahrensschritt des erfindungsgemäßen Verfahrens zum strahlbasierten Schmelzen oder Sintern;
- Figur 16: einen auf den Verfahrensschritt von Figur 15 folgenden Verfahrensschritt des erfindungsgemäßen Verfahrens zum strahlbasierten Schmelzen oder Sintern;
- Figur 17: einen Ausschnitt der Vorrichtung gemäß Figur 1 nach Beendigung des eines auf den Verfahrensschritt von Figur 16 folgenden Verfahrensschritt;
- Figur 18: eine schematische Darstellung eines Zwischenschritts einer Weiterbildung des erfindungsgemäßen Verfahrens;
- Figur 19: eine schematische Darstellung eines auf den Zwischenschritt gemäß Figur 18 folgenden Verfahrensschritt;
- Figur 20: eine schematische Darstellung eines Pulverbetts nach dem Stand der Technik vor dem strahlbasierten Schmelzen;
- Figur 21: das Pulverbett gemäß Figur 20 nach dem strahlbasierten Schmelzen eines Bauteils;
- Figur 22: das Bauteil gemäß Figur 21 in Alleindarstellung;
- Figur 23: eine schematische Darstellung eines erfindungsgemäßen Pulverbetts vor dem strahlbasierten Schmelzen;
- Figur 24: das Pulverbett gemäß Figur 23 nach dem strahlbasierten Schmelzen eines Bauteils; und
- Figur 25: das Bauteil gemäß Figur 24 in Alleindarstellung.

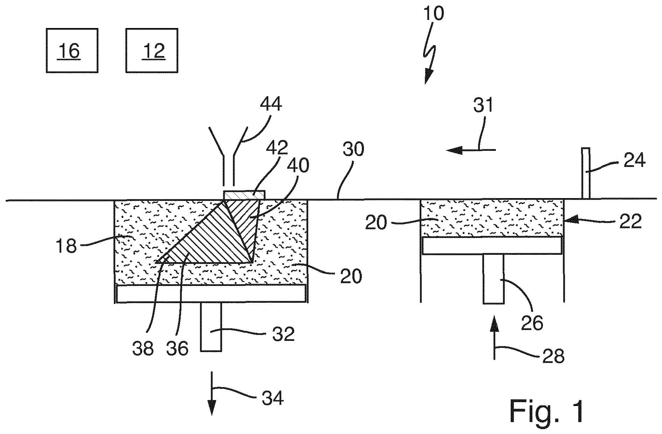

Figur 1 zeigt eine erfindungsgemäße Vorrichtung 10 zum strahlbasierten Schmelzen oder Sintern.

In den Figuren 1 bis 9 sind Verfahrensschritte eines Verfahrens zum strahlbasierten Schmelzen oder Sintern unter Verwendung der Vorrichtung 10 gemäß Figur 1 gezeigt.

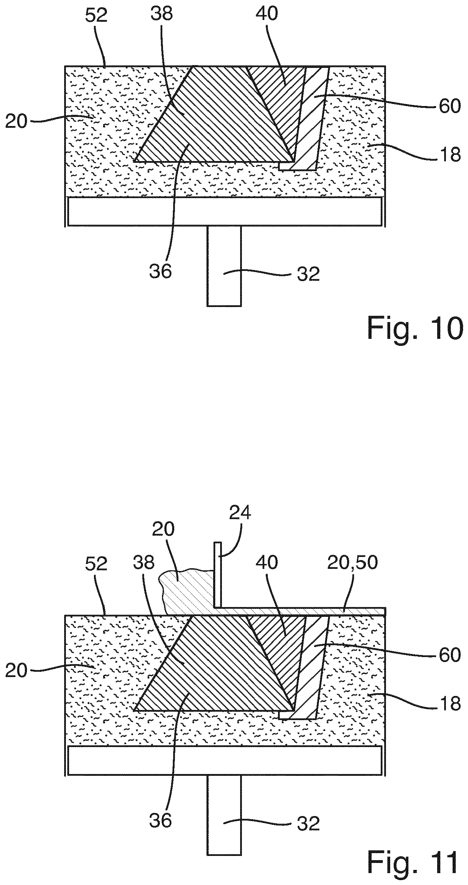

In den Figuren 10 bis 17 sind Verfahrensschritte eines erfindungsgemäßen Verfahrens zum strahlbasierten Schmelzen oder Sintern unter Verwendung der Vorrichtung 10 gemäß Figur 1 gezeigt.

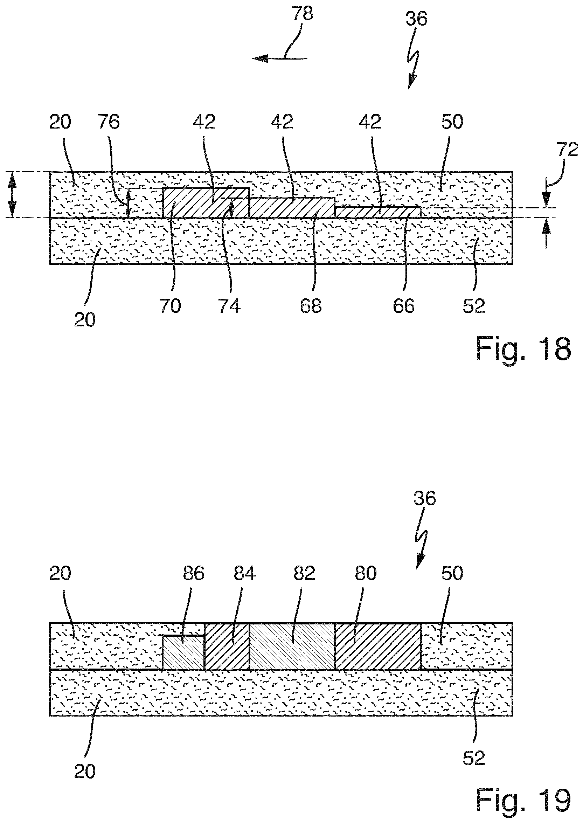

In den Figuren 18 und 19 sind schematisch Verfahrensschritte einer Weiterbildung des erfindungsgemäßen Verfahrens gezeigt, mit dem Gradienten in der Werkstoffzusammensetzung eingebracht werden können.

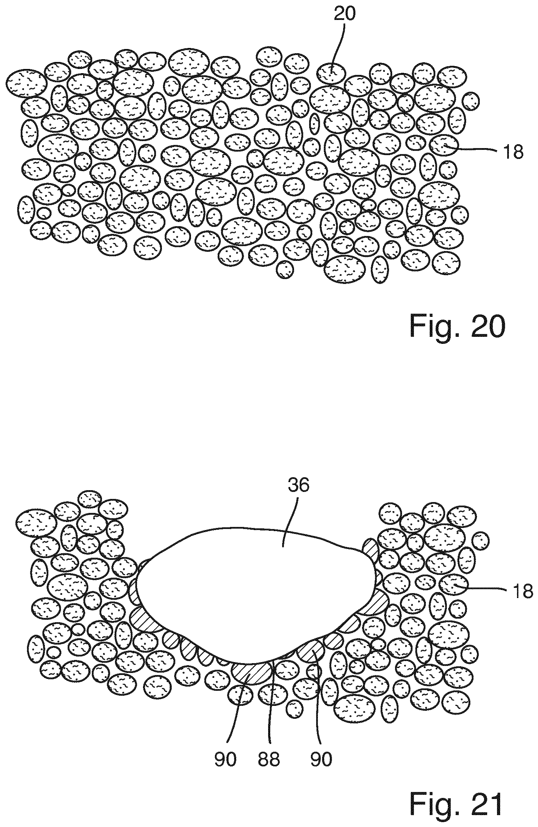

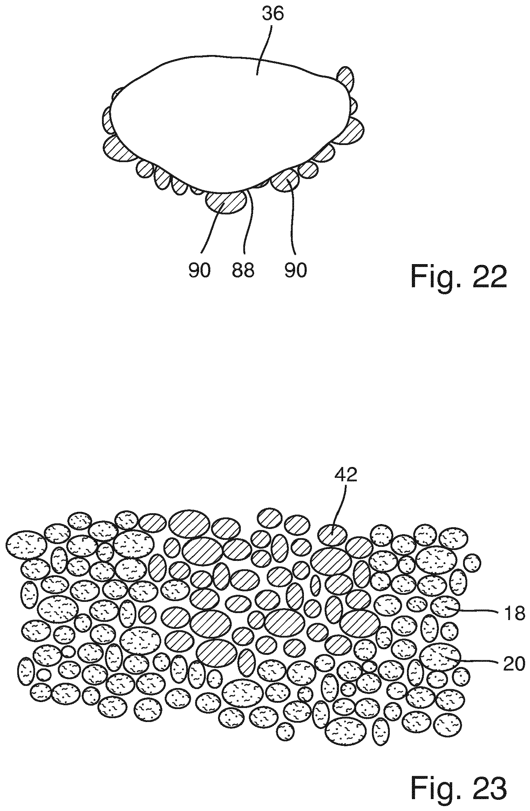

Die Figuren 20 bis 22 zeigen einen Ausschnitt eines Pulverbetts beim strahlbasierten Schmelzen oder Sintern nach dem Stand der Technik, wobei die Figuren 23 bis 25 ein Pulverbett beim strahlbasierten Schmelzen oder Sintern unter Verwendung des erfindungsgemäßen Verfahrens zeigen. Sich in den Figuren entsprechende Elemente sind dabei mit den sich entsprechenden Bezugszeichen gekennzeichnet.

Die in Figur 10 gezeigte Vorrichtung 10 zum strahlbasierten Schmelzen oder Sintern ist als Vorrichtung zum selektiven Lasersintern, selektiven Laserschmelzen, selektiven Elektronenstrahlsintern oder selektiven Elektronenstrahlschmelzen ausgebildet.

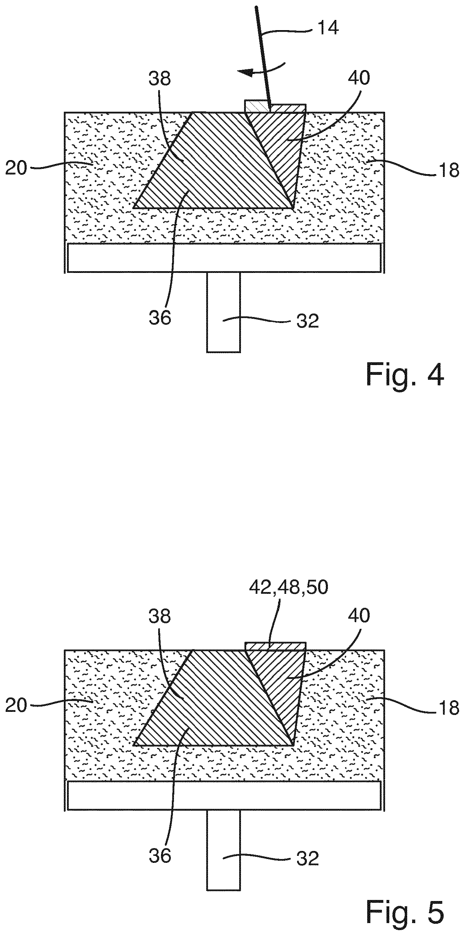

Daher weist sie eine in Figur 1 schematisch gezeigte Generatoreinheit 12 auf, die zur Erzeugung eines in Figur 1 nicht gezeigten Laser- oder Elektronenstrahls 14 (vgl. Figuren 4, 8, 12, 16) ausgelegt ist. Die Vorrichtung 12 umfasst ferner eine NC-Steuerung 16 (numerical control).

Die Vorrichtung 10 umfasst ein Pulverbett 18, das zur Aufnahme eines ersten pulverförmigen Werkstoffs 20 ausgelegt ist. Die Vorrichtung 10 weist ferner eine Speichereinrichtung 22 für den ersten pulverförmigen Werkstoff 20 und ein Rakel 24 oder eine Walze auf, das zum schichtweisen Aufbringen des ersten Werkstoffs 20 im Pulverbett 18 ausgelegt ist. Durch Verwendung des Rakels 14 können auf schnelle und kostengünstige Weise große Mengen des ersten Werkstoffs 20 gleichzeitig aufgebracht werden.

Die Aufbringung des ersten pulverförmigen Werkstoffs 20 ins Pulverbett 18 funktioniert wie folgt:
Die Speichereinrichtung 22 umfasst eine Vorschubeinrichtung 26, die in Richtung des Pfeils 28 nach oben bewegt wird, so dass in der Speichereinrichtung 22 vorhandener erster pulverförmiger Werkstoff 20 in Richtung des Pfeils 28 nach oben gedrückt wird. Erster pulverförmiger Werkstoff 20, welcher über die Oberfläche 30 hinausragt, wird dann mit dem Rakel 24 von der Speichereinrichtung 22 in Richtung des Pfeils 31 abgezogen und in das Pulverbett 18 geschoben. Dort wird der erste pulverförmige Werkstoff 20 dann bereichsweise mittels eines Laser- oder Elektronenstrahls 14 fixiert.

Die NC-Steuerung 16 ist zur numerischen Steuerung des Laser- oder Elektronenstrahls 14 ausgelegt, so dass der Laser- oder Elektronenstrahl 14 in Bahnen über das Pulverbett 18 gelenkt wird und das Pulverbett nacheinander in Schichten ebenenweise abarbeitet. Das Pulverbett 18 umfasst eine Vorschubeinrichtung 32, die zum schichtweisen Absenken des Pulverbetts 18 in Richtung eines Pfeils 34 ausgelegt ist, so dass nach der jeweiligen Fixierung des ersten Werkstoffs 20 in einer Ebene oder Schicht ebenen- bzw. schichtweise ein Bauteil 36 entsteht. Die Daten für die NC-Steuerung 16 werden dabei aus CAD-Daten der Bauteilgeometrie abgeleitet.

Wie in Figur 1 deutlich zu erkennen ist, umfasst das Bauteil 36 einen ersten, im Querschnitt in etwa dreieckigen Abschnitt 38 und einen zweiten, im Querschnitt in etwa dreieckigen Abschnitt 40. Der erste Abschnitt 38 ist aus dem ersten pulverförmigen Werkstoff 20 durch Sintern oder Schmelzen mittels des Laser- oder Elektronenstrahls 14 hergestellt.

Der zweite Abschnitt 40 ist aus einem zweiten pulverförmigen Werkstoff 42 ebenfalls durch Sintern oder Schmelzen mittels des Laser- oder Elektronenstrahls 14 hergestellt. Zum Aufbringen des zweiten Werkstoffs 42 umfasst die Vorrichtung 10 eine Dosiereinrichtung 44, die zum bereichsweisen Aufbringen des zweiten Werkstoffs 42 ausgelegt ist, bspw. durch Fördern des zweiten Werkstoffs 42 durch einen Kanal, durch eine Düse oder durch einen Druckkopf, insbesondere unter Verwendung eines Trägerfluids. Dabei ist es denkbar, dass als Trägerfluid eine Flüssigkeit oder Druckluft verwendet wird.

Wenn als Trägerfluid eine Flüssigkeit eingesetzt wird, ist es denkbar, dass das Trägerfluid vor dem Fixieren des zweiten Werkstoffs 42 mittels eines defokussierten Laser- oder Elektronenstrahls 14 verdampft oder zersetzt wird.

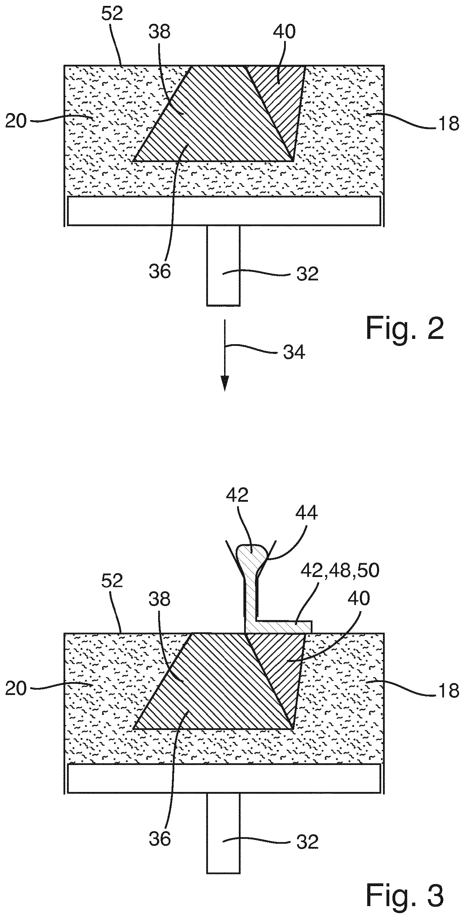

Bei den beiden in den Figuren 2 bis 17 gezeigten Verfahren zum selektiven Schmelzen oder Sintern zur generativen Herstellung von Bauteilen 36 handelt es sich um ein Verfahren zum selektiven Lasersintern, selektiven Laserschmelzen, selektiven Elektronenstrahlsintern oder selektiven Elektronenstrahlschmelzen unter Verwendung der Vorrichtung 10 gemäß Figur 1. In den Figuren 2 bis 9 ist dabei eine nicht erfindungsgemäßes Verfahrens gezeigt, wobei die Figuren 10 bis 17 ein erfindungsgemäßes Verfahren zeigen.

Wie in Figur 2 zu erkennen ist, ist im Pulverbett 18 bereits ein halbfertiges Bauteil 36 angeordnet. Das Bauteil umfasst einen ersten, im Querschnitt rautenförmigen Abschnitt 38, sowie einen zweiten, im Querschnitt dreieckigen Abschnitt 40. Der erste Abschnitt 38 ist aus dem ersten pulverförmigen Werkstoff 20 durch Schmelzen oder Sintern mittels des Laser- oder Elektronenstrahls 14 hergestellt.

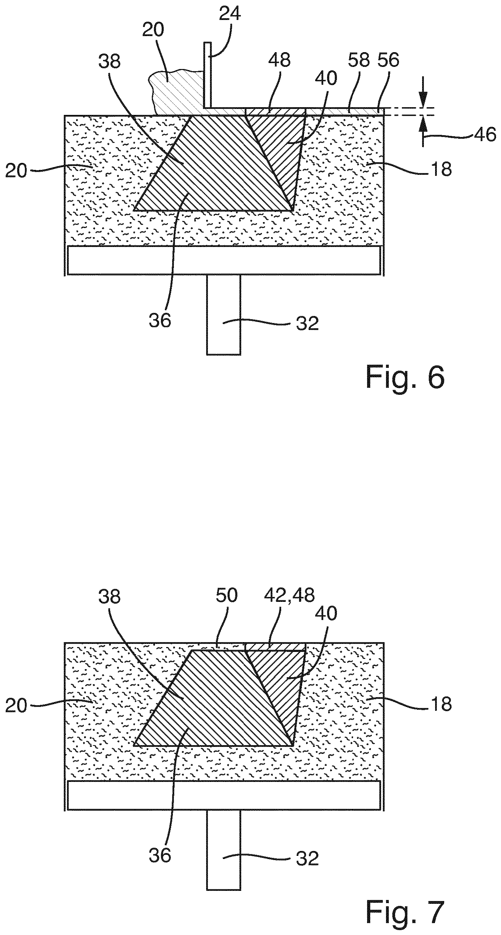

Zu Beginn des Verfahrensschritts gemäß Figur 2 wird das Pulverbett 18 mittels der Vorschubeinrichtung 32 in Richtung des Pfeils 34 um eine in Figur 6 gezeigte Grunddicke 46 abgesenkt. Anschließend wird der zweite Werkstoff 42 in Pulverform bereichsweise in einen ersten Bereich 48 einer ersten Schicht 50 mittels der Dosiereinrichtung 44 aufgebracht (vgl. Figur 3) und dann an einer darunterliegenden Schicht 52 durch Schmelzen oder Sintern mit dem Laser- oder Elektronenstrahl 14 fixiert (vgl. Figur 4). Die darunterliegende Schicht 52 ist dabei in einer Ebene 54 angeordnet, welche parallel zu einer Ebene 56 ist, in welcher die erste Schicht 50 angeordnet ist. Die Ebenen 54, 56 beider Schichten 50, 52 sind wiederum orthogonal zur durch den Pfeil 34 angedeuteten Bewegungsrichtung der Vorschubeinrichtung 32. Figur 5 zeigt einen Zwischenschritt, bei dem der zweite Werkstoff 42 im ersten Bereich 48 der ersten Schicht fixiert ist.

Anschließend wird, wie in Figur 6 gezeigt, der erste pulverförmige Werkstoff 20 mit dem Rakel 24 oder der Walze in die erste Schicht 50 an einem vom ersten Bereich 48 verschiedenen zweiten Bereich 58 aufgebracht. Figur 7 zeigt das Pulverbett 18 nach dem Aufbringen des ersten pulverförmigen Werkstoffs 20 mit einer vollständigen ersten Schicht 50, in welcher der zweite Werkstoff 42 im ersten Bereich 48 bereits fixiert ist, der erste Werkstoff 20 jedoch noch pulverförmig lose aufliegt.

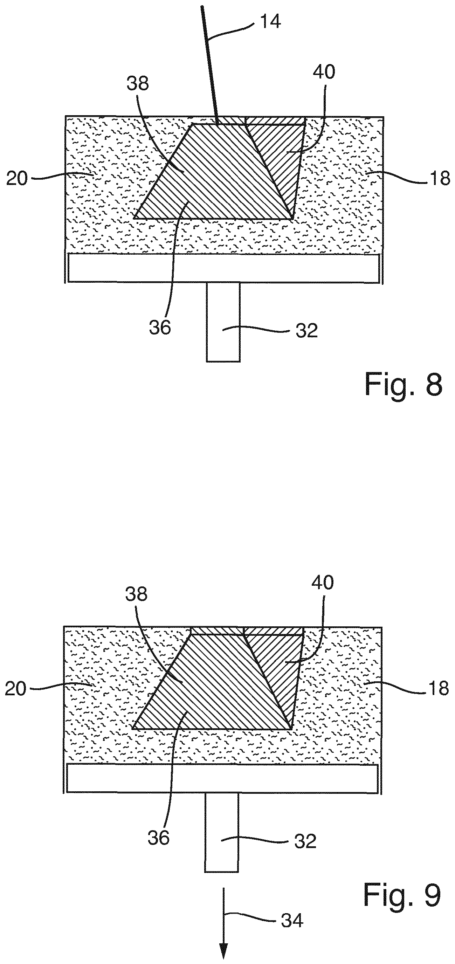

Danach erfolgt, unter Verwendung der CAD-Daten des Bauteils 36 durch den von der NC-Steuerung 16 gesteuerten Laser- oder Elektronenstrahl 14 ein Fixieren des ersten Werkstoffs 20 an der darunterliegenden Schicht 52 durch Schmelzen oder Sintern (vgl. Figur 8), so dass in Figur 9 die fertig fixierte erste Schicht 50 des Bauteils 36 gezeigt ist. Anschließend senkt die Vorschubeinrichtung 32 das Pulverbett 18 wiederum um die Grunddicke 46 in Richtung des Pfeils 34 nach unten ab und das Verfahren beginnt mit dem in Figur 2 gezeigten Verfahrensschritt wieder von vorn.

In Figur 10 ist ebenfalls im Pulverbett 18 bereits ein halbfertiges Bauteil 36 angeordnet. Das Bauteil umfasst, ähnlich wie das in den Figuren 2 bis 9 gezeigte Bauteil, einen ersten, im Querschnitt rautenförmigen Abschnitt 38, sowie einen zweiten, im Querschnitt dreieckigen Abschnitt 40. Der erste Abschnitt 38 ist aus dem ersten pulverförmigen Werkstoff 20 durch Sintern oder Schmelzen mittels des Laser- oder Elektronenstrahls 14 hergestellt. Darüber hinaus ist am Bauteil 36 noch ein Randbereich 60 angeordnet. Der Randbereich 60 weist eine geringere Festigkeit als die Abschnitte 38, 40 des Bauteils 36 auf und lässt sich daher nach dem letzten Verfahrensschritt des generativen Fertigungsverfahrens vergleichsweise leicht vom Bauteil 36 ablösen.

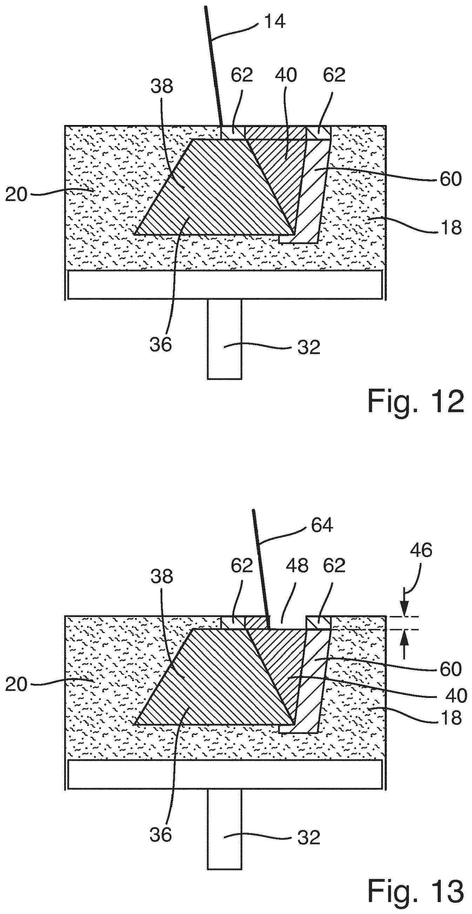

Zu Beginn des Verfahrensschritts gemäß Figur 10 wird das Pulverbett 18 mittels der Vorschubeinrichtung 32 in Richtung des Pfeils 34 um die in Figur 13 gezeigte Grunddicke 36 abgesenkt. Anschließend wird eine erste Schicht 50 des ersten pulverförmigen Werkstoffs 20 mit dem Rakel 24 oder einer Walze flächig aufgebracht (vgl. Figur 11).

Nach dem flächigen Aufbringen der ersten Schicht 50 des ersten pulverförmigen Werkstoffs 20 wird der erste Werkstoff 20, wie in Figur 12 gezeigt, bereichsweise in einem Bereich 62 an der darunterliegenden Schicht 50 fixiert. Dies erfolgt mittels eines Laser- oder Elektronenstrahls 14 durch Schmelzen oder Sintern, der eine geringere Intensität und/oder Leistung aufweist als der Laser- oder Elektronenstrahl 14, der zum Herstellen der Bauteilgeometrie durch Schmelzen oder Sintern verwendet wird. Es ist jedoch auch möglich, das bereichsweise Fixieren mit einem Laser- oder Elektronenstrahls 14 durch Schmelzen oder Sintern durchzuführen, welcher mit einer höheren Vorschubgeschwindigkeit bzw. Scan-Geschwindigkeit bewegt wird als der Laser- oder Elektronenstrahl 14, mit dem der zweite Werkstoff 42 anschließend an der darunterliegenden Schicht 52 fixiert wird. Somit kann eine in den ersten Werkstoff im zweiten Bereich 62 eingebrachte Strecken- oder Flächenenergie begrenzt werden. Unter Streckenenergie wird in der Schweißtechnik die pro zurückgelegter Strecke einer Schweißnaht eingebrachte Energie in J/mm verstanden. Unter einer Flächenenergie wird hierzu die pro Fläche einer Schicht eingebrachte Energie in J/mm² bezeichnet.

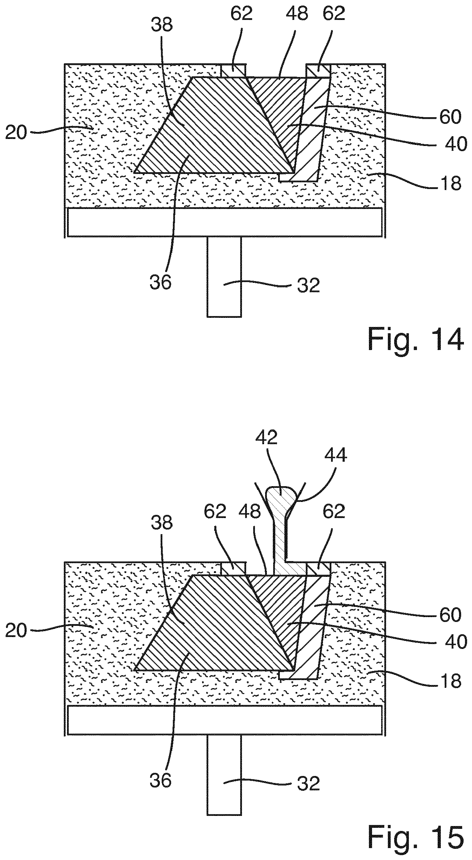

Wie in Figur 13 deutlich zu erkennen ist, wird der erste Werkstoff 20 anschließend in einem ersten Bereich 48, der vom Bereich 62 begrenzt wird, bereichsweises entfernt, bspw. durch Wegblasen oder Absaugen oder durch mechanisches Verdrängen, insbesondere durch Wegfegen, Wegbürsten oder, wie in Figur 13 gezeigt, durch Wegschieben unter Verwendung eines Stifts 64. Es ist jedoch auch denkbar, dass der erste Werkstoff 20 im ersten Bereich 48 durch Wegschleudern unter Verwendung eines Laser- oder Elektronenstrahls entfernt wird. Dabei ist denkbar, dass das Wegschleudern durch partielles Verdampfen oder Sublimieren oder durch elektrostatische Aufladung oder durch schlagartige Ausdehnung eines verwendeten Schutzgases erfolgt. Figur 14 zeigt einen Ausschnitt des Pulverbetts 14 nach Beendigung des Verfahrensschritts von Figur 13.

Nach dem Entfernen des ersten Werkstoffs 20 im ersten Bereich wird ein pulverförmiger zweiter Werkstoff 42 in dem ersten Bereich 48 der ersten Schicht 50 mittels der Dosiereinrichtung 44 bereichsweise aufgebracht. Dabei wird der Bereich 62 als Schablone für das Aufbringen des zweiten Werkstoffs 42 genutzt, so dass ein gezieltes Aufbringen des zweiten Werkstoffs 42 in den ersten Bereich 48 ermöglicht werden kann (vgl. Figur 15).

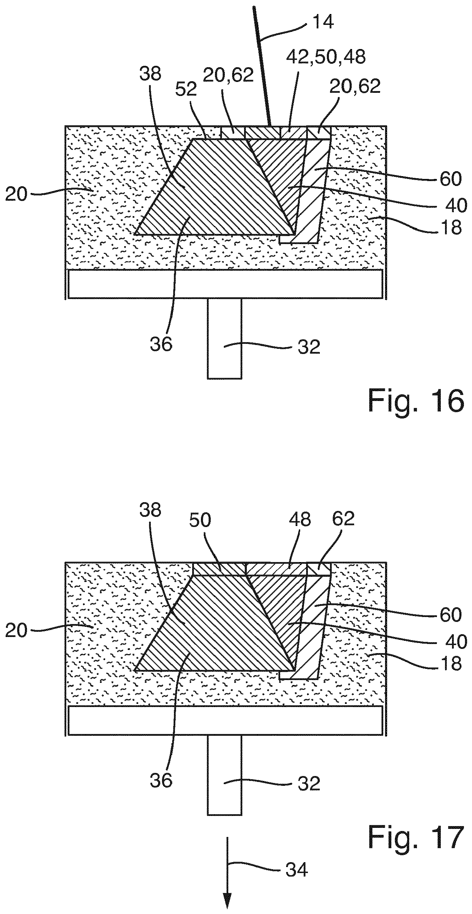

Wie in Figur 16 zu erkennen ist, wird dann der zweite Werkstoff 42 an der darunterliegenden Schicht 52 im ersten Bereich 48 mit dem Laser- oder Elektronenstrahl 14 fixiert.

Gleichzeitig mit dem Fixieren des zweiten Werkstoffs 42 oder anschließend an das Fixieren des zweiten Werkstoffs wird der erste Werkstoff an der darunterliegenden Schicht 52 ebenfalls durch Schmelzen oder Sintern mit dem Laser- oder Elektronenstrahl 14 fixiert. Dies geschieht unter Verwendung der CAD-Daten des Bauteils 36 durch den von der NC-Steuerung 16 gesteuerten Laser- oder Elektronenstrahl 14, so dass in Figur 17 die fertig fixierte erste Schicht 50 des Bauteils 36 gezeigt ist. Dort ist deutlich zu erkennen, dass die Schicht 50 auch Teile der Abschnitte 38, 40, sowie des Randbereichs 60 umfasst und dass auch der Bereich 62 an der Stelle, die zur eigentlichen Bauteilgeometrie des Bauteils 36 gehört, d.h. im Abschnitt 38, durch einen Laser- oder Elektronenstrahl 14 mit höherer Leistung oder Intensität, nachverfestigt wurde. Anschließend senkt die Vorschubeinrichtung 32 das Pulverbett 18 wiederum um die Grunddicke 46 in Richtung des Pfeils 34 nach unten ab und das Verfahren beginnt mit dem in Figur 10 gezeigten Verfahrensschritt wieder von vorn.

Als erster Werkstoff 20 kann bspw. ein Werkstoff mit einer hohen Bruchzähigkeit verwendet werden, wobei als zweiter 42 Werkstoff bspw. ein Werkstoff mit hohem Verschleißwiderstand verwendet werden kann, so dass bspw. Bauteile 36, wie Ventile oder Einspritzdüsen hergestellt werden können, wobei die Bauteilstruktur der Ventile oder Einspritzdüsen aus einem ersten Werkstoff 20 mit hoher Duktilität hergestellt sein kann und wobei die Dichtfläche des Ventils aus einem vergleichsweise harten und verschleißbeständigen Werkstoff hergestellt sein kann.

Es ist auch möglich, Turbinenschaufeln herzustellen, deren Bauteilstruktur im Inneren aus hochfesten und kriechbeständigen ersten Werkstoffen 20 hergestellt ist, wobei die Oberfläche der Turbinenschaufeln aus einem hitzebeständigen und isolierenden zweiten Werkstoff 42 hergestellt sein kann.

Vorteilhafterweise wird der erste Werkstoff 20 in einem Massenverhältnis vom ersten Werkstoff 20 zum zweitem Werkstoff 42 im fertigen Bauteil 36 von etwa 95 zu 5 bis etwa 90 zu 10 verwendet.

In den Figuren 18 und 19 sind schematisch Verfahrensschritte einer Weiterbildung des erfindungsgemäßen Verfahrens gezeigt, mit dem Gradienten in der Werkstoffzusammensetzung in ein Bauteil 36 eingebracht werden können.

In den Figuren 18 und 19 ist jeweils nur die erste Schicht 50, sowie die darunterliegende Schicht 52 eines Bauteils 36 gezeigt.

Die Schichten 50, 52 weisen jeweils die Grunddicke 46 auf. Bei der in den Figuren 2 bis 9 gezeigten 1. Alternative des erfindungsgemäßen Verfahrens wird dann der zweite Werkstoff 42, wie in Figur 18 gezeigt, in der ersten Schicht 50 in voneinander verschiedenen Subschichten 66, 68, 70 aufgebracht, die jeweils eine Subschichtdicke 72, 74, 76 aufweisen, welche kleiner ist als die Grunddicke 46. Die aneinandergrenzenden Subschichten 66, 68, 70 werden in Richtung des Pfeils 78 richtungsgebunden dicker, d.h. die jeweilige Subschichtdicke 72, 74, 76 wird größer, so dass sich ein Subschichtdickengradient ausbildet. Die Subschichten 66, 68, 70 können analog zum in Figur 4 dargestellten Verfahrensschritt der 1. Alternative an der darunterliegenden Schicht 52 durch Schmelzen oder Sintern mittels eines Laser- oder Elektronenstrahls fixiert werden, wobei anschließend der erste Werkstoff 20 mit dem Rakel 24 aufgebracht wird, so dass Figur 18 einen Zustand zeigt, in dem der zweite Werkstoff 42 bereits fixiert ist, der erste Werkstoff 20 in der ersten Schicht 50 jedoch noch im pulverförmigen Zustand vorhanden ist.

Wie in Figur 19 gezeigt ist, werden dann beim Fixieren des ersten Werkstoffs 20 an der darunterliegenden Schicht 52 (vgl. Figur 8) der erste Werkstoff 20 und der zweite Werkstoff 42 gemeinsam gesintert oder geschmolzen.

Dabei werden die zuvor aufgebrachten Subschichten 66, 68, 70 des zweiten Werkstoffs 42 mit innerhalb der ersten Schicht 50 bis zur Grunddicke 46 aufgebrachtem ersten Werkstoff 20 verschmolzen, so dass sich der erste und der zweite Werkstoff 20, 42 in der Schmelze miteinander vermischen. Die dabei an den Bereichen 80, 82, 84, 86 der jeweiligen Subschichten 66, 68, 70 entstehenden Mischungsverhältnisse vom ersten und vom zweiten Werkstoff 20, 42 entsprechen dem Verhältnis der Subschichtdicken 66, 68, 70 zur Grunddicke 46 bzw. dem Massenverhältnis vom ersten Werkstoff zum zweiten Werkstoff. Mit dem in den Figuren 2 bis 19 gezeigten Verfahren ist es jedoch auch denkbar, Eigenspannungen in ein Bauteil 36 einzubringen. Dabei weist der erste Werkstoff 20 eine erste Phasenumwandlungstemperatur auf, wobei der zweite Werkstoff 42 eine zweite Phasenumwandlungstemperatur aufweist, die von der ersten Phasenumwandlungstemperatur verschieden ist. Alternativ oder ergänzend ist es auch möglich, dass der erste Werkstoff 20 einen ersten Wärmeausdehnungskoeffizienten aufweist und dass der zweite Werkstoff 42 einen zweiten Wärmeausdehnungskoeffizienten aufweist, der vom ersten Wärmeausdehnungskoeffizienten verschieden ist.

Derartige Werkstoffe 20, 42 unterscheiden sich insbesondere im Eisen-, Nickel-, Kohlenstoff-, Mangan- und/oder Chromgehalt. Indem Werkstoffe 20, 42 mit voneinander verschiedener Phasenumwandlungstemperatur und/oder voneinander verschiedenen Wärmeausdehnungskoeffizienten verwendet werden, können die verschiedenen Umwandlungsverhalten durch eine an das generative Schmelz- oder Sinterverfahren (vgl. Figuren 2 bis 19) anschließende Wärmebehandlung dazu genutzt werden, besonders günstige Eigenspannungszustände in einem Bauteil 36 zu erzeugen.

Bei einer derartigen Wärmebehandlung können die Glüh- und/oder Abkühlbedingungen derart gewählt werden, dass die Werkstoffe 20, 42 bei unterschiedlichen Temperaturen bzw. unterschiedlichen Zeiten umwandeln. Somit ist es denkbar, dass ein Bauteil 36 bei der Wärmebehandlung vor der Martensitstarttemperatur in einem Warmbad bei einer bestimmten Temperatur gehalten wird, um thermisch induzierte Spannungen abzubauen. Dabei können definierte Umwandlungs-Eigenspannungen erhalten werden. Insbesondere kann die Abkühlgeschwindigkeit und/oder die Haltedauer dann so gewählt werden, dass bei wenigstens einem der Werkstoffe 20, 42 keine Umwandlung in den Martensitbereich auftritt, wobei bei wenigstens einem davon verschiedenen Werkstoff 20, 42 eine Abkühlgeschwindigkeit derart gewählt wird, dass eine Volumenzunahme in diesem Werkstoff 20, 42 erfolgt. Somit können insbesondere an Oberflächen von zyklisch beanspruchten Bauteilen 36, wie bspw. bei Turbinenschaufeln, Werkstoffe 20, 42 mit einem Chrom- und/oder Nickelgehalt von bis zu 20 % eingesetzt werden, um im Bereich der Oberfläche Druckeigenspannungen durch die Wärmebehandlung zu erzeugen.

In den Figuren 23 bis 25 ist ebenfalls eine Weiterbildung des in den Figuren 2 bis 19 beschriebenen Verfahrens gezeigt. Die Figuren 20 bis 22 zeigen dabei schematisch ein Pulverbett 18 nach dem Stand der Technik, in dem ein Bauteil 36 aus einem einzigen Werkstoff 20 geschmolzen oder gesintert wird.

In Figur 20 ist der noch ungeschmolzene oder ungesinterte pulverförmige Werkstoff 20 gezeigt, wobei Figur 21 ein fertig geschmolzenes oder gesintertes Bauteil 36 zeigt, an dessen Oberfläche 88 nicht vollständig aufgeschmolzene Partikel 90 des ersten Werkstoffs 20 anhaften, welche zu einer unregelmäßigen Oberfläche 88 des Bauteils führen. In Figur 22 ist das Bauteil 36 mit den an der Oberfläche 88 anhaftenden Partikeln 90 in Alleindarstellung gezeigt.

Wie aus den Figuren 23 bis 25 hervorgeht, ermöglicht es das erfindungsgemäße Verfahren nunmehr, auch Bauteile 36 mit außen glatter Oberfläche 88 herzustellen. Hierzu wird beim in den Figuren 2 bis 19 gezeigten Verfahren ein erster Werkstoff 20 eingesetzt, der einen Schlackebildner umfasst oder der ein Schlackebildner ist.

Dabei kann der Schlackebildner Mangansilikat, Rutil, Calciumoxid, Magnesiumoxid oder Calciumfluorid umfassen.

Figur 23 zeigt ein Pulverbett 18, das vom ersten Werkstoff 20, d.h. vom Schlackebildner gebildet wird. In den Schlackebildner bzw. den ersten Werkstoff 20 ist bereichsweise der zweite Werkstoff 42 aufgebracht.

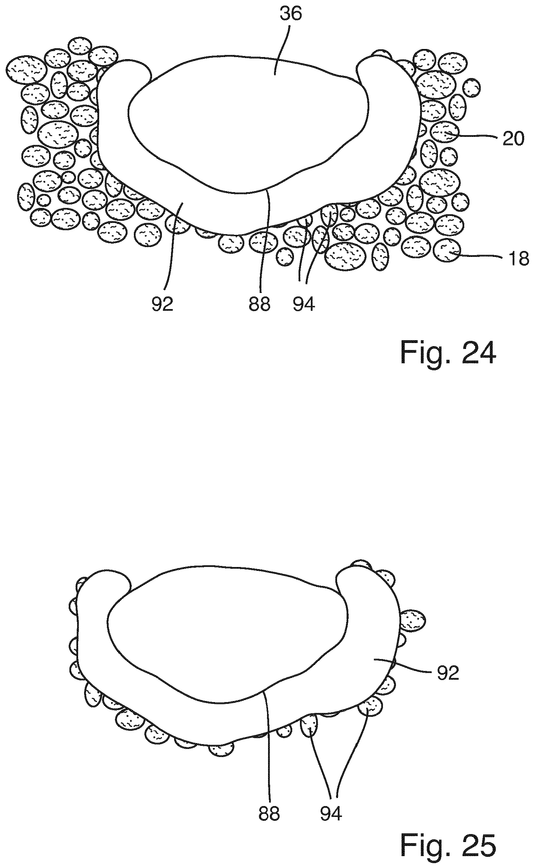

Figur 24 zeigt das Pulverbett 18 gemäß Figur 23 nach dem Fixieren des zweiten Werkstoffs 42. Dabei wird der erste Werkstoff 20 zumindest teilweise ebenfalls geschmolzen, so dass ein an das Bauteil 36, welches aus dem zweiten Werkstoff 42 hergestellt ist, angrenzender Bereich 92 des Schlackebildners bzw. ersten Werkstoffs 20 geschmolzen wird, um das Bauteil mit Schlackebildner zu benetzen und somit die dabei entstehenden Oberflächenkräfte zwischen dem ersten und dem zweiten Werkstoff 20, 42 ausnutzen zu können. Dabei ist es vorteilhaft, wenn eine Oberflächenspannung des zweiten Werkstoffs 42 größer ist als eine Oberflächenspannung des ersten Werkstoffs 20, d.h. des Schlackebildners.

Wie in den Figuren 24 und 25 erkennbar ist, wird das Bauteil 36 hin zum Pulverbett 18 vollständig von dem Bereich 92 aus Schlackebildner bzw. dem erstem Werkstoff 20 begrenzt und weist somit eine glatte Oberfläche 88 ohne anhaftende Partikel 90 auf. Lediglich auf der Außenseite des Bereichs 92 haften nicht vollständig aufgeschmolzene Partikel 94 des ersten Werkstoffs 20 bzw. des Schlackebildners an.

Diese Partikel 94 können jedoch gemeinsam mit dem Bereich 92 nach Abschluss des Verfahrens zum strahlbasierten Schmelzen oder Sintern einfach entfernt werden, so dass man ein Bauteil 36 aus dem zweiten Werkstoff 42 erhält, dass eine glatte Oberfläche aufweist.

Somit kann bei Verwendung eines Schlackebildners als ersten Werkstoff 20 der das Pulverbett 18 bildende erste Werkstoff 20, anstatt Teil der Bauteilstruktur des fertigen Bauteils 36 zu werden, dazu genutzt werden, Oberflächenrauhigkeiten des Bauteils 36, welches aus dem zweiten Werkstoff 42 hergestellt ist, zu reduzieren, wenn die Oberfläche des aus dem zweiten Werkstoff 42 hergestellten Bauteils 36 durch die geschmolzene Oberfläche der Schlacke gebildet wird. Dies hat sich insbesondere für solche Bauteile 36 als vorteilhaft erwiesen, die aufgrund ihrer Bauteilstruktur, bspw. aufgrund von Zugänglichkeitsproblemen, nur schwer oder gar nicht mechanisch nachbearbeitet werden können.

Die Verwendung von Schlackebildnern ist ferner vorteilhaft, um hohe mechanische Gütewerte zu erreichen, da die Schlacken im zweiten Werkstoff 42 enthaltene Verunreinigungen abbinden. Dabei ist es denkbar, dass, abhängig vom ausgewählten Schlackebildner bzw. vom ersten Werkstoff 20, keine Vermischung des ersten Werkstoffs 20 und des zweiten Werkstoffs 42 erfolgt, so dass der zweite Werkstoff 42 nicht verloren geht, was bspw. bei teuren Werkstoffen wie Gold oder Chrom vorteilhaft ist.

Besonders vorteilhaft ist es, wenn die Dichte des ersten Werkstoffs 20 in etwa der Dichte des zweiten Werkstoffs 42 entspricht. Weiterhin werden die Viskositätseigenschaften derart gewählt, dass der zweite Werkstoff 42 durch die entstehende Schlacke des ersten Werkstoffs 20 benetzt wird oder nicht benetzt wird, so dass sich auf Mikroebene gleichmäßige Querschnittsübergänge ergeben.

Es ist auch denkbar, dass der erste Werkstoff 20 einen ersten Teilwerkstoff umfasst, welcher ein Schlackebildner ist, und dass der erste Werkstoff 20 einen zweiten Teilwerkstoff umfasst, der kein Schlackebildner ist. Somit kann der erste Werkstoff 20 auch ein sogenanntes "Zweistoffsystem" sein. Es ist denkbar, dass der zweite Teilwerkstoff ein vom zweiten Werkstoff 42 verschiedener Werkstoff ist. Bei Verwendung eines zweiten Teilwerkstoffs, welcher größere Oberflächenkräfte als der erste Teilwerkstoff aufweist, kann der zweite Teilwerkstoff auf dem Bauteil 36, d.h. auf dem zweiten Werkstoff 42 abgeschieden werden, so dass sich auf dem Bauteil 36 eine Schicht aus dem ersten Teilwerkstoff abscheidet. Wenn sich der zweite Teilwerkstoff und der zweite Werkstoff 42 unterscheiden, kann eine Beschichtung mit vergleichsweise hoher Oberflächengüte erzeugt werden.

Es ist jedoch auch möglich, dass der zweite Teilwerkstoff identisch zum zweiten Werkstoff 42 ist. Somit können genauere und/oder hochwertigere Oberflächen des Bauteils 36, welche aus dem zweiten Werkstoff 42 besteht, insbesondere Oberflächen mit einer geringeren Oberflächenrauheit, erzeugt werden, als durch das lokale Aufbringen des zweiten Werkstoffs 42.

## Patentansprüche

1. Verfahren zum strahlbasierten selektiven Schmelzen oder Sintern zur generativen Herstellung von Bauteilen (36), bestehend aus Verfahren zum selektiven Lasersintern, selektiven Laserschmelzen, selektiven Elektronenstrahlsintern oder selektiven Elektronenstrahlschmelzen, wobei sequentiell Schichten (50, 52) aus einem pulverförmigen ersten Werkstoff (20) in einem Pulverbett (18) aufgebracht werden und der pulverförmige erste Werkstoff (20) der Schichten (50, 52) nach Aufbringen einer jeweiligen Schicht (50, 52) schichtweise selektiv durch einen Laserstrahl (14) oder Elektronenstrahl geschmolzen oder gesintert wird, **gekennzeichnet durch** die folgenden Schritte:
- flächiges Aufbringen wenigstens einer ersten Schicht (50) des ersten pulverförmigen Werkstoffs (20) mit einer Rakel (24) oder einer Walze;
- bereichsweises Fixieren des ersten pulverförmigen Werkstoffs (20) in einem zweiten Bereich (62) durch Schmelzen oder Sintern mit einem Laser- oder Elektronenstrahl (14), wobei das Schmelzen oder Sintern mit einem Laser- oder Elektronenstrahl (14) erfolgt, der eine geringere Intensität und/oder Leistung oder eine höhere Vorschubgeschwindigkeit bzw. Scan-Geschwindigkeit aufweist als der Laser- oder Elektronenstrahl (14), mit dem ein zweiter Werkstoff (42) an der darunterliegenden Schicht (52) fixiert wird,
- und anschließendes bereichsweises Entfernen des ersten Werkstoffs (20) in einem ersten Bereich (48); anschließendes bereichsweises Aufbringen eines insbesondere pulverförmigen zweiten Werkstoffs (42) in dem ersten Bereich (48) der ersten Schicht (50) und anschließendes Fixieren des zweiten Werkstoffs (42) oder des zweiten Werkstoffs (42) und des ersten Werkstoffs (20) an einer darunterliegenden Schicht (52) durch Schmelzen oder Sintern mit einem Laser- oder Elektronenstrahl (14).

2. Verfahren nach Anspruch 1, wobei nach dem flächigen Aufbringen der Schicht (50) des ersten pulverförmigen Werkstoffs (20) und vor dem bereichsweisen Entfernen des ersten Werkstoffs (20) im ersten Bereich (48) der erste Werkstoff (20) bereichsweise in einem vom ersten Bereich (48) verschiedenen zweiten Bereich (62) an der darunterliegenden Schicht (52) fixiert wird.

3. Verfahren nach Anspruch 2, wobei der erste Werkstoff (20) vor dem bereichsweisen Entfernen im ersten Bereich (48) derart bereichsweise fixiert wird, dass der zweite Bereich (62) den ersten Bereich (48) begrenzt.

4. Verfahren nach Anspruch 2 oder 3, wobei das bereichsweise Entfernen des ersten Werkstoffs (20) durch wegblasen oder absaugen erfolgt oder wobei das bereichsweise Entfernen des ersten Werkstoffs (20) durch mechanisches Verdrängen, insbesondere durch wegfegen, wegbürsten oder wegschieben erfolgt, oder wobei das bereichsweise Entfernen des ersten Werkstoffs (20) durch Wegschleudern unter Verwendung eines Laser- oder Elektronenstrahl erfolgt.

5. Verfahren nach wenigstens einem der vorherigen Ansprüche, wobei das bereichsweise Aufbringen des zweiten Werkstoffs (42) durch Fördern des zweiten Werkstoffs (42) mittels einer Dosiereinrichtung (44), insbesondere durch einen Kanal, durch eine Düse oder durch einen Druckkopf, insbesondere unter Verwendung eines Trägerfluids, weiter insbesondere unter Verwendung von Druckluft, erfolgt.

6. Verfahren nach Anspruch 5, wobei das Trägerfluid vor dem Fixieren des zweiten Werkstoffs (42) mittels eines Laser- oder Elektronenstrahls (14), insbesondere mittels eines defokussierten Laser- oder Elektronenstrahls (14), verdampft oder zersetzt wird.

7. Verfahren nach wenigstens einem der vorherigen Ansprüche, wobei die Schichten (50, 52) jeweils eine Grunddicke (46) aufweisen und wobei der zweite Werkstoff (42) in der ersten Schicht (50) in voneinander verschiedenen Subschichten (66, 68, 70) aufgebracht wird, die eine Subschichtdicke (72, 74, 76) aufweisen, welche kleiner ist als die Grunddicke (46).

8. Verfahren nach wenigstens einem der vorherigen Ansprüche, wobei beim Fixieren des ersten Werkstoffs (20) an der darunterliegenden Schicht (52) der erste Werkstoff (20) und der zweite Werkstoff (42) gemeinsam gesintert oder geschmolzen werden, oder wobei beim Fixieren des zweiten Werkstoffs (42) an der darunterliegenden Schicht (52) der zweite Werkstoff (42) und der erste Werkstoff (20) gemeinsam gesintert oder geschmolzen werden.

9. Verfahren nach wenigstens einem der vorherigen Ansprüche, wobei die Schichten (50, 52) jeweils in zueinander parallelen Ebenen (54, 56) aufgebracht werden.

10. Verfahren nach wenigstens einem der vorherigen Ansprüche, wobei das Verfahren in einem Pulverbett (18) durchgeführt wird.

11. Verfahren nach wenigstens einem der vorherigen Ansprüche, wobei der erste Werkstoff (20) eine erste Phasenumwandlungstemperatur aufweist und wobei der zweite Werkstoff (42) eine zweite Phasenumwandlungstemperatur aufweist, die von der ersten Phasenumwandlungstemperatur verschieden ist, und/oder wobei der erste Werkstoff (20) einen ersten Wärmeausdehnungskoeffizienten aufweist und wobei der zweite Werkstoff (42) einen zweiten Wärmeausdehnungskoeffizienten aufweist, der vom ersten Wärmeausdehnungskoeffizienten verschieden ist.

12. Verfahren nach wenigstens einem der vorherigen Ansprüche, wobei der erste Werkstoff (20) einen Schlackebildner umfasst, insbesondere ein Schlackebildner ist.

13. Verfahren nach Anspruch 12, wobei der Schlackebildner Mangansilikat, Rutil, Calciumoxid, Magnesiumoxid oder Calciumfluorid umfasst.

14. Verfahren nach Anspruch 10 oder 13, wobei die Dichte des ersten Werkstoffs (20) der Dichte des zweiten Werkstoffs (42) entspricht.

15. Verfahren nach wenigstens einem der Ansprüche 12 bis 14, wobei beim Fixieren des zweiten Werkstoffs (42) der erste Werkstoff (20) zumindest teilweise geschmolzen wird.

16. Verfahren nach wenigstens einem der Ansprüche 12 bis 15, wobei der erste Werkstoff (20) einen ersten Teilwerkstoff umfasst, welcher ein Schlackebildner ist, und wobei der erste Werkstoff (20) einen zweiten Teilwerkstoff umfasst, der kein Schlackebildner ist.

17. Vorrichtung (10) zum strahlbasierten selektiven Schmelzen oder Sintern, insbesondere Vorrichtung zum selektiven Lasersintern, selektiven Laserschmelzen, selektiven Elektronenstrahlsintern oder selektiven Elektronenstrahlschmelzen, und mit einer Steuereinheit umfassend Befehle, die bewirken, dass die Vorrichtung die Verfahrensschritte nach wenigstens einem der vorherigen Ansprüche ausführt,
mit wenigstens einem Pulverbett (18), das zur Aufnahme eines ersten pulverförmigen Werkstoffs (20) ausgelegt ist,
mit einer Speichereinrichtung (22) für den ersten pulverförmigen Werkstoff (20), und
mit einer Rakel (14) oder einer Walze, das zum schichtweisen Aufbringen des ersten Werkstoffs (20) im Pulverbett (18) ausgelegt ist, wobei
die Speichereinrichtung (22) für den ersten pulverförmigen Werkstoff (20) eine Vorschubeinrichtung (26) umfasst, durch welche erster pulverförmiger Werkstoff (20) über eine Oberfläche (30) gedrückt werden kann, wobei
eine Dosiereinrichtung (44) vorgesehen ist, die zum bereichsweisen Aufbringen des zweiten Werkstoffs (42) durch Fördern des zweiten Werkstoffs (42) durch einen Kanal, durch eine Düse oder durch einen Druckkopf ausgelegt ist.

18. Vorrichtung (10) nach Anspruch 17, **dadurch gekennzeichnet, dass** der Kanal, die Düse oder der Druckkopf so ausgebildet ist, dass er den zweiten Werkstoff unter Verwendung eines Trägerfluids, weiter insbesondere unter Verwendung von Druckluft, aufbringt.

## Claims

1. Method for selective beam-based melting or sintering for the additive manufacturing of components (36), consisting of a method for selective laser sintering, selective laser melting, selective electron beam sintering, or selective electron beam melting, with layers (50, 52) consisting of a powdery first material (20) sequentially being applied in a powder bed (18), and the powdery first material (20) of the layers (50, 52) being selectively melted or sintered layer by layer by a laser beam (14) or electron beam after a particular layer (50, 52) has been applied, **characterized by** the following steps:
- applying at least one first layer (50) of the first powdery material (20) in a planar manner with a doctor blade (24) or a roller;
- fixing the first powdery material (20) in some regions in a second region (62) by melting or sintering with a laser beam or electron beam (14), the melting or sintering taking place with a laser beam or electron beam (14) which has a lower intensity and/or power or a higher feed speed or scanning speed than the laser beam or electron beam (14) with which a second material (42) is fixed to the underlying layer (52),
- and subsequently removing the first material (20) in some regions in a first region (48), subsequently applying an in particular powdery second material (42) in some regions in the first region (48) of the first layer (50) and subsequently fixing the second material (42) or the second material (42) and the first material (20) on an underlying layer (52) by melting or sintering with a laser beam or electron beam (14).

2. Method according to claim 1, wherein after the layer (50) of the first powdery material (20) has been applied in a planar manner and before the first material (20) is removed in some regions in the first region (48), the first material (20) is fixed on the underlying layer (52) in some regions in a second region (62) different from the first region (48).

3. Method according to claim 2, wherein the first material (20) is fixed in some regions before being removed in some regions in the first region (48) such that the second region (62) limits the first region (48).

4. Method according to claim 2 or claim 3, wherein the first material (20) is removed in some regions by blowing away or suctioning, or wherein the first material (20) is removed in some regions by mechanical displacement, in particular by blowing away, brushing away, or pushing away, or wherein the first material (20) is removed in some regions by ejection using a laser beam or electron beam.

5. Method according to at least one of the preceding claims, wherein the second material (42) is applied in some regions by the second material (42) being conveyed by means of a dosing device (44), in particular through a channel, through a nozzle or through a print head, in particular using a carrier fluid, further in particular using compressed air.

6. Method according to claim 5, wherein the carrier fluid is vaporized or dissolved before the second material (42) is fixed by means of a laser beam or electron beam (14), in particular by means of a defocused laser beam or electron beam (14).

7. Method according to at least one of the preceding claims, wherein the layers (50, 52) each have a base thickness (46) and wherein the second material (42) is applied in the first layer (50) in different sub-layers (66, 68, 70) which have a sublayer thickness (72, 74, 76) which is smaller than the base thickness (46).

8. Method according to at least one of the preceding claims, wherein, when the first material (20) is fixed to the underlying layer (52), the first material (20) and the second material (42) are jointly sintered or melted, or wherein, when the second material (42) is fixed to the underlying layer (52), the second material (42) and the first material (20) are jointly sintered or melted.

9. Method according to at least one of the preceding claims, wherein the layers (50, 52) are each applied in mutually parallel planes (54, 56).

10. Method according to at least one of the preceding claims, wherein the method is carried out in a powder bed (18).

11. Method according to at least one of the preceding claims, wherein the first material (20) has a first phase transformation temperature and wherein the second material (42) has a second phase transformation temperature which is different from the first phase transformation temperature, and/or wherein the first material (20) has a first thermal expansion coefficient, and wherein the second material (42) has a second thermal expansion coefficient that is different from the first thermal expansion coefficient.

12. Method according to at least one of the preceding claims, wherein the first material (20) comprises a slag forming agent, in particular a slag former.

13. Method according to claim 12, wherein the slag former comprises manganese silicate, rutile, calcium oxide, magnesium oxide or calcium fluoride.

14. Method according to either claim 10 or claim 13, wherein the density of the first material (20) corresponds to the density of the second material (42).

15. Method according to at least one of claims 12 to 14, wherein, when the second material (42) is fixed, the first material (20) is at least partially melted.

16. Method according to at least one of claims 12 to 15, wherein the first material (20) comprises a first partial material which is a slag former, and wherein the first material (20) comprises a second partial material which is not a slag former.

17. Device (10) for selective beam-based melting or sintering, in particular device for selective laser sintering, selective laser melting, selective electron beam sintering, or selective electron beam melting, and comprising a control unit comprising instructions which cause the device to carry out the method steps according to at least one of the preceding claims,
comprising at least one powder bed (18) which is designed to receive a first powdery material (20),
comprising a storage device (22) for the first powdery material (20), and
comprising a doctor blade (14) or a roller which is designed for applying the first material (20) layer by layer in the powder bed (18), wherein
the storage device (22) for the first powdery material (20) comprises a feed device (26) by means of which first powdery material (20) can be pressed over a surface (30), wherein
a dosing device (44) is provided which is designed for applying the second material (42) in some regions by the second material (42) being conveyed through a channel, through a nozzle or through a print head.

18. Device (10) according to claim 17, **characterized in that** the channel, the nozzle or the print head is designed such that it applies the second material using a carrier fluid, further in particular using compressed air.

## Revendications

1. Procédé pour la fusion sélective ou le frittage sélectif basé(e) sur un faisceau pour la fabrication additive de pièces (36), constitué d'un procédé pour le frittage sélectif par laser, la fusion sélective par laser, le frittage sélectif par faisceau d'électrons ou la fusion sélective par faisceau d'électrons, dans lequel des couches (50, 52) composées d'un premier matériau pulvérulent (20) sont appliquées de manière séquentielle dans un lit de poudre (18) et le premier matériau pulvérulent (20) des couches (50, 52) après l'application d'une couche (50, 52) respective est fondu ou fritté par couches de manière sélective par un faisceau laser (14) ou faisceau d'électrons, **caractérisé par** les étapes suivantes :
- l'application à plat d'au moins une première couche (50) du premier matériau pulvérulent (20) avec une racle (24) ou un cylindre ;
- la fixation par endroits du premier matériau pulvérulent (20) dans une deuxième zone (62) par fusion ou frittage avec un faisceau laser ou d'électrons (14), dans lequel la fusion ou le frittage s'effectue avec un faisceau laser ou d'électrons (14), qui présente une intensité et/ou puissance inférieure ou une vitesse d'avance ou vitesse de balayage plus grande que le faisceau laser ou d'électrons (14), avec lequel un deuxième matériau (42) est fixé sur la couche (52) située dessous,
- et le retrait par endroits subséquent du premier matériau (20) dans une première zone (48) ; l'application subséquente par endroits d'un deuxième matériau (42) en particulier pulvérulent dans la première zone (48) de la première couche (50) et la fixation subséquente du deuxième matériau (42) ou du deuxième matériau (42) et du premier matériau (20) sur une couche (52) située dessous par fusion ou frittage avec un faisceau laser ou d'électrons (14).

2. Procédé selon la revendication 1, dans lequel après l'application plane de la couche (50) du premier matériau pulvérulent (20) et avant le retrait par endroits du premier matériau (20) dans la première zone (48) le premier matériau (20) est fixé par endroits dans une deuxième zone (62) différente de la première zone (48) sur la couche (52) située dessous.

3. Procédé selon la revendication 2, dans lequel le premier matériau (20) avant le retrait par endroits dans la première zone (48) est fixé par endroits de telle sorte que la deuxième zone (62) délimite la première zone (48).

4. Procédé selon la revendication 2 ou 3, dans lequel le retrait par endroits du premier matériau (20) s'effectue par soufflage ou aspiration ou dans lequel le retrait par endroits du premier matériau (20) s'effectue par refoulement mécanique, en particulier par balayage, brossage ou repoussage, ou dans lequel le retrait par endroits du premier matériau (20) s'effectue par expulsion au loin au moyen d'un faisceau laser ou d'électrons.

5. Procédé selon au moins l'une des revendications précédentes, dans lequel l'application par endroits du deuxième matériau (42) s'effectue par transport du deuxième matériau (42) au moyen d'un système de dosage (44), en particulier à travers un canal, à travers une buse ou à travers une tête d'impression, en particulier au moyen d'un fluide porteur, plus particulièrement au moyen d'air comprimé.

6. Procédé selon la revendication 5, dans lequel le fluide porteur est vaporisé ou décomposé avant la fixation du deuxième matériau (42) au moyen d'un faisceau laser ou d'électrons (14), en particulier au moyen d'un faisceau laser ou d'électrons (14) défocalisé.

7. Procédé selon au moins l'une des revendications précédentes, dans lequel les couches (50, 52) présentent respectivement une épaisseur de couche (46) et dans lequel le deuxième matériau (42) dans la première couche (50) est appliqué en sous-couches (66, 68, 70) différentes les unes des autres, qui présentent une épaisseur de sous-couche (72, 74, 76), laquelle est inférieure à l'épaisseur de couche (46).

8. Procédé selon au moins l'une des revendications précédentes, dans lequel lors de la fixation du premier matériau (20) sur la couche (52) située dessous le premier matériau (20) et le deuxième matériau (42) sont frittés ou fondus ensemble, ou dans lequel lors de la fixation du deuxième matériau (42) sur la couche (52) située dessous le deuxième matériau (42) et le premier matériau (20) sont frittés ou fondus ensemble.

9. Procédé selon au moins l'une des revendications précédentes, dans lequel les couches (50, 52) sont appliquées respectivement dans des plans (54, 56) parallèles les uns aux autres.

10. Procédé selon au moins l'une des revendications précédentes, dans lequel le procédé est mis en œuvre dans un lit de poudre (18).

11. Procédé selon au moins l'une des revendications précédentes, dans lequel le premier matériau (20) présente une première température de transition de phase et dans lequel le deuxième matériau (42) présente une deuxième température de transition de phase, qui est différente de la première température de transition de phase, et/ou dans lequel le premier matériau (20) présente un premier coefficient de dilatation thermique et dans lequel le deuxième matériau (42) présente un deuxième coefficient de dilatation thermique, qui est différent du premier coefficient de dilatation thermique.

12. Procédé selon au moins l'une des revendications précédentes, dans lequel le premier matériau (20) comprend un fondant de scorification, en particulier est un fondant de scorification.

13. Procédé selon la revendication 12, dans lequel le fondant de scorification comprend du silicate de manganèse, du rutile, de l'oxyde de calcium, de l'oxyde de magnésium ou du fluorure de calcium.

14. Procédé selon la revendication 10 ou 13, dans lequel la densité du premier matériau (20) correspond à la densité du deuxième matériau (42).

15. Procédé selon au moins l'une des revendications 12 à 14, dans lequel lors de la fixation du deuxième matériau (42) le premier matériau (20) est fondu au moins en partie.

16. Procédé selon au moins l'une des revendications 12 à 15, dans lequel le premier matériau (20) comprend un premier matériau partiel, lequel est un fondant de scorification, et dans lequel le premier matériau (20) comprend un deuxième matériau partiel, qui n'est pas un fondant de scorification.

17. Dispositif (10) pour la fusion sélective ou le frittage sélectif basé(e) sur un faisceau, en particulier dispositif pour le frittage sélectif par laser, la fusion sélective par laser, le frittage sélectif par faisceau d'électrons ou la fusion sélective par faisceau d'électrons, et avec une unité de commande comprenant des instructions, qui ont pour effet que le dispositif exécute les étapes de procédé selon au moins l'une des revendications précédentes,
avec au moins un lit de poudre (18), qui est conçu pour recevoir un premier matériau pulvérulent (20),
avec un système de stockage (22) pour le premier matériau pulvérulent (20), et
avec une racle (14) ou un cylindre, qui est conçu(e) pour l'application par couches du premier matériau (20) dans le lit de poudre (18), dans lequel
le système de stockage (22) comprend pour le premier matériau pulvérulent (20) un système d'avancement (26), par lequel le premier matériau pulvérulent (20) peut être pressé sur toute l'étendue d'une surface (30), dans lequel
un système de dosage (44) est prévu, qui est conçu pour l'application par endroits du deuxième matériau (42) par transport du deuxième matériau (42) à travers un canal, à travers une buse ou à travers une tête d'impression.

18. Dispositif (10) selon la revendication 17, **caractérisé en ce que** le canal, la buse ou la tête d'impression est réalisé(e) de sorte qu'il(elle) applique le deuxième matériau au moyen d'un fluide porteur, plus particulièrement au moyen d'air comprimé.
